Europäisches Patentamt

European Patent Office

Office européen des brevets

(19)

(11) EP 1 148 024 A1

# (12) EUROPEAN PATENT APPLICATION
published in accordance with Art. 158(3) EPC

(43) Date of publication:
24.10.2001 Bulletin 2001/43

(21) Application number: 00956985.6

(22) Date of filing: 06.09.2000

(51) Int Cl.7: **C01B 3/48**, H01M 8/06

(86) International application number:
PCT/JP00/06075

(87) International publication number:
WO 01/19727 (22.03.2001 Gazette 2001/12)

(84) Designated Contracting States:
AT BE CH CY DE DK ES FI FR GB GR IE IT LI LU
MC NL PT SE
Designated Extension States:
AL LT LV MK RO SI

(30) Priority: 10.09.1999 JP 25718699
10.09.1999 JP 25719699

(71) Applicant: Daikin Industries, Ltd.
Osaka-shi, Osaka 530-8323 (JP)

(72) Inventors:
• MATSUI, Nobuki, Kanaoka Factory, Sakai Plant,
Sakai-shi, Osaka 591-8511 (JP)
• IKEGAMI, Shuji, Kanaoka Factory, Sakai Plant,
Sakai-shi, Osaka 591-8511 (JP)
• OKAMOTO, Yasunori,
Kanaoka Factory, Sakai Plant,
Sakai-shi, Osaka 591-8511 (JP)
• YONEMOTO, Kazuo,
Kanaoka Factory, Sakai Plant,
Sakai-shi, Osaka 591-8511 (JP)

(74) Representative: Gossel, Hans K., Dipl.-Ing.
Lorenz-Seidler-Gossel
Widenmayerstrasse 23
80538 München (DE)

## (54) APPARATUS FOR PRODUCING HYDROGEN GAS AND FUEL CELL SYSTEM USING THE SAME

(57) Placed in a fuel reformer (5) is a catalyst (27) which exhibits an activity to the partial oxidation reaction of a source fuel. The source fuel, oxygen, and steam are supplied to the fuel reformer (5) such that the ratio $O_2/C$, i.e., the ratio of the number of moles of the oxygen to the number of moles of carbon of the source fuel, is not less than 0.9 times the $O_2/C$ theoretical mixture ratio in the partial oxidation reaction, and the $H_2O/C$ ratio, i. e., the ratio of the number of moles of the steam to the number of the source fuel carbon moles is not less than 0.5, wherein the partial oxidation reaction occurs in the catalyst (27) to cause a water gas shift reaction to take place in which CO produced by the partial oxidation reaction is a reactant, for generation of hydrogen.

Fig. 1

EP 1 148 024 A1

Printed by Jouve, 75001 PARIS (FR)

**Description**

**TECHNICAL FIELD**

The present invention relates to a hydrogen gas generator for producing a hydrogen gas from a source fuel of the hydrocarbon family, oxygen, and steam and to a fuel cell system employing such a hydrogen gas generator.

**BACKGROUND ART**

It is possible to generate hydrogen by the reforming of hydrocarbon or methanol, and hydrogen gas generators capable of hydrogen generation by such reforming are applicable to fuel cells, hydrogen engines, and the like. Fuel cells are known generally as an electricity generator in which hydrogen delivered as a fuel to the negative electrode and oxygen delivered as an oxidant to the positive electrode react together through an electrolyte.

Japanese Patent Gazette No. S58-57361 shows a technique in which either air, air/oxygen, or air/steam is acted on hydrocarbon in the presence of a rhodium catalyst for obtaining hydrogen and CO (carbon monoxide) by partial oxidation. The reaction temperature is from 690 to 900 degrees centigrade. Air and oxygen are used as an oxidant for hydrocarbon and steam is used to generate, by the steam reforming reaction, hydrogen from a fuel which has been left unoxidized in the oxidation reaction. Accordingly, reactions taking place on the rhodium catalyst when air and steam are acted on hydrocarbon are a partial oxidation reaction and a steam reforming reaction.

Japanese Unexamined Patent Gazette No. S54-76602 shows a technique in which a free oxygen-containing gas is acted on hydrocarbon at a temperature in the range of 815 to 1930 degrees centigrade and under an absolute atmospheric pressure in the range of 1 to 250 ata for generating hydrogen and CO by partial oxidation and, in addition, steams are added for the preheating, dispersion, and transfer of a temperature moderator and hydrocarbon fuel.

Japanese Unexamined Patent Gazette No. H06-92603 shows a technique in which hydrocarbon, oxygen-containing gas, and steam are subjected, under a pressure in the range of 2 from 100 bars and at a temperature in the range of 750 to 1200 degrees centigrade (preferably, in the range of 1000 to 1200 degrees centigrade), to the partial oxidation reaction in the presence of a catalyst for generating hydrogen and CO.

Japanese Unexamined Patent Gazette No. H07-57756 shows a fuel cell electricity generation system having a fuel reformer in which steam is acted on hydrocarbon in the presence of a catalyst for generating hydrogen and CO by a steam reforming reaction. Oxygen is introduced into the fuel reformer to cause, at the same time, the partial oxidation reaction of the hydrocarbon to take place. Since the steam reformation reaction is endothermic, this compensates for the heat necessary for the steam reformation reaction by making utilization of the partial oxidation reaction which is exothermic.

Japanese Unexamined Patent Gazette No. H10-308230 shows a fuel cell electricity generation apparatus comprising a fuel reformer for reforming hydrocarbon into hydrogen by a partial oxidation reaction, a CO shift reactor for causing CO produced in the reforming process to undergo oxidation by a water gas shift reaction, and a selective oxidization device for subjecting the remaining CO to selective oxidization. This prior art further shows that in addition to the catalyst exhibiting an activity to the partial oxidation reaction, the fuel reformer is filled with another catalyst exhibiting an activity to the steam reforming reaction of the hydrocarbon. Hydrocarbon, oxygen, and steam are supplied to the reformer to produce hydrogen by the partial oxidation reaction of the hydrocarbon and the steam reforming reaction.

As described above, when performing the reforming of hydrocarbon into hydrogen by the partial oxidation reaction, it has been known that oxygen and steam are acted on the hydrocarbon in the presence of a catalyst, in which the steam is added for obtaining a steam reforming reaction which is endothermic or for controlling the temperature or the like. This requires that an external heating means with a large heat transfer area be provided in the fuel reformer in order to maintain the reforming reaction. Moreover, relatively large amounts of CO are generated by the hydrocarbon partial oxidation reaction and the steam reforming reaction. Accordingly, when the presence of CO may be a problem (for example, when the catalyst electrode of a fuel cell must be prevented from undergoing poisoning by CO), a large-size shift reactor is required for the oxidation removal of CO.

As stated in the foregoing patent gazettes (H07-57756 and H10-308230), with a view to eliminating the need for an external heating means, there is a concept that an absorption of heat by the steam reforming reaction is compensated for by a liberation of heat by the partial oxidation reaction. However, for the case of methane, the heat of reaction of the steam reforming reaction is about 205 kJ/mol (heat absorption), whereas the heat of reaction of the partial oxidation reaction is only about 36 kJ/mol, and the difference in heat quantity is large. Accordingly, it is practically difficult to eliminate the need for an external heating means by just employing the concept that steam is added for the purpose of mainly causing a steam reforming reaction to take place.

Accordingly, an object of the present invention is to reduce the external heat quantity required for maintaining the fuel reforming reaction and to further reduce it to zero.

Furthermore, another object of the present invention is to reduce the amount of CO that is produced by the reforming of fuel and thereby to reduce the load of a CO shift reactor.

Further, still another object of the present invention is to accomplish effective utilization of heat in the entire fuel cell system and to provide a simplified system configuration.

## DISCLOSURE OF THE INVENTION

In order to accomplish these objects, in the present invention, partial oxidation and water gas shift reactions proceed successively.

The present invention provides a hydrogen gas generator for generating hydrogen from a source fuel of the hydrocarbon family, oxygen, and steam, the generator comprising:

a fuel reformer **(5)** which is provided with a catalyst which exhibits an activity to a partial oxidation reaction of the source fuel;
wherein the source fuel, oxygen, and steam are supplied to the reformer **(5)** so that the partial oxidation reaction occurs on the catalyst **(27)** and a water gas shift reaction occurs in which CO produced in the partial oxidation reaction is a reactant.

The above successive reactions are expressed as follows.

$$CnHm + (n/2)O_2 \rightarrow nCO + (m/2)H_2 \tag{1}$$

$$CO + H_2O \rightarrow CO_2 + H_2 \tag{2}$$

The reaction formula (1) is a partial oxidation reaction by which target hydrogen is obtained and CO, which is produced simultaneously with the hydrogen, is oxidized by the water gas shift reaction expressed by the reaction formula (2), during which hydrogen is generated. The addition of steam to the source gas does not much affect the fuel conversion rate in the partial oxidation reaction of the reaction formula (1), but the steam addition makes it easy for the water gas shift reaction of the reaction formula (2) to take place (because the equilibrium inclines toward the generation side), thereby increasing the yield of hydrogen.

The partial oxidation reaction of the reaction formula (1) is an exothermic reaction, and when the source fuel CnHm is methane ($CH_4$), $\Delta H = -36.07$ kJ/mol. The water gas shift reaction of the reaction formula (2) is also an exothermic reaction, and $\Delta H = -41.12$ kJ/mol. Accordingly, either the fuel reformer **(5)** or the source gas (source fuel, oxygen or air, and steam) must be heated up to a certain temperature in order to initiate a reforming reaction. However, once the reaction starts an amount of heat necessary for maintaining the reaction can be obtained from the reaction heat. This reduces the amount of external heating, therefore making it possible to eliminate the need for external heating.

Further, since CO, produced in the partial oxidation reaction of the reaction formula (1), is oxidized by the water gas shift reaction of the reaction formula (2), this reduces the concentration of CO of the reformed gas. Accordingly, even when a CO shift reactor (which is a device capable of oxidation of CO by the water gas shift reaction) and a CO selective oxidation reactor are provided, their load is reduced, so that they can be down sized.

It is preferable that the water gas shift reaction is controlled such that the $CO_2$/CO ratio, which is the ratio of $CO_2$ to CO in an outlet gas of the fuel reformer **(5),** is not less than 0.2. This makes it possible to achieve an increased hydrogen yield.

The above point will be made more clear in the description of the following embodiments of the present invention. The fact that the $CO_2$/CO ratio is high means that the water gas shift reaction is proceeding, whereby hydrogen is produced.

The increase in the $CO_2$/CO ratio, i.e., the proceeding of the water gas shift reaction, relates to the supply rate of source fuel and steam to the fuel reformer **(5),** and it is therefore preferable that the $H_2O$/C ratio, which is the ratio of the number of moles of the steam to the number of moles of carbon of the source fuel, is not less than 0.5.

In the present invention, the addition of steam is for the water gas shift reaction, and if the $H_2O$/C ratio increases, this causes the water gas shift reaction to sufficiently proceed. If the ratio is less than 0.5, then the water gas shift reaction will not be proceeded sufficiently. As a result, the CO concentration of a gas obtained increases and the down-sizing of the CO shift reactor cannot be achieved. Furthermore, the hydrogen yield is not improved.

Further, if the $H_2O$/C ratio is increased above 0.5, this ensures that the CO concentration of a reformed gas is positively reduced by the water gas shift reaction. This prevents the temperature of a CO shift reactor from becoming excessively high. In other words, when the concentration of CO in the reformed gas is high, the CO shift reactor undergoes an excessive increase in its temperature by the water gas shift reaction there (for example, the shift reactor temperature becomes not less than 100 K above the shift reactor inlet gas temperature). This may result in catalyst sintering or early-stage degradation. However, such is prevented.

It is preferable that the $H_2O/C$ ratio be not more than 3. Increasing the $H_2O/C$ ratio, i.e., increasing the amount of steam, provides the advantage that the water gas shift reaction is promoted. However, an increase in the steam amount requires a large amount of heat corresponding to that increase, therefore resulting in the drop in system total energy efficiency. Accordingly, the $H_2O/C$ ratio is set not more than 3.

It is preferable that the outlet gas temperature of the fuel reformer **(5)** be not more than 800 degrees centigrade. The reason is as follows. As stated above, both the partial oxidation reaction and the water gas shift reaction are an exothermic reaction. Therefore, unlike the steam reforming reaction which is an endothermic reaction, if the reaction temperature becomes excessively high, this provides disadvantages in the reaction proceeding. It is therefore preferable that the lower limit of the outlet gas temperature be about 450 degrees centigrade. The reason is that if the outlet gas temperature falls below such a lower limit this makes the partial oxidation reaction and the water gas shift reaction difficult to proceed.

It is preferable that the supply rate of source fuel and oxygen to the fuel reformer **(5)** is set such that the $O_2/C$ ratio, which is the ratio of the number of moles of the oxygen to the number of moles of carbon of the source fuel, is not less than 0.9 times the $O_2/C$ theoretical mixture ratio in the partial oxidation reaction.

The reason for the above setting in which the $O_2/C$ ratio is set not less than 0.9 times the $O_2/C$ theoretical mixture ratio in the partial oxidation reaction is as follows. Even when the flow rate (space velocity) of a source gas that is supplied to the fuel reformer **(5)** is high, it is possible to provide a high fuel conversion rate (reforming rate). If the $O_2/C$ ratio is set not less than 0.9 times the $O_2/C$ theoretical mixture ratio in the partial oxidation reaction, then the fuel conversion rate will approach 90%, therefore providing practicability. On the other hand, if the $O_2/C$ ratio is set not more than 0.9 times the $O_2/C$ theoretical mixture ratio in the partial oxidation reaction, then the fuel conversion rate will not approach 90%, therefore failing to provide practicability.

As can been seen obviously from the reaction formula **(1),** the $O_2/C$ theoretical mixture ratio in the partial oxidation reaction is 0.5. Therefore, the $O_2/C$ ratio is not less than 0.45.

If the lower limit of the ratio is set to fall below the theoretical mixture ratio, there is the possibility that a part of the source fuel undergoes a steam reforming reaction. However, the percentage thereof is slight, so that the thermal effect (the temperature drop) on the main reaction (the partial oxidation reaction) is negligible.

Reducing the occurrence of such a steam reforming reaction as rarely as possible can be achieved just by increasing the $O_2/C$ ratio above the theoretical mixture ratio, in other words, by setting the $O_2/C$ ratio above than 0.5. However, if the $O_2/C$ ratio is increased excessively, the complete oxidation reaction is likely to occur, leading to the drop in the yield of hydrogen. Therefore, the upper limit of the $O_2/C$ ratio is preferably 1.5 times the $O_2/C$ theoretical mixture ratio, i.e., about 0.75.

As can obviously be seen from the above, it is preferable that the supply rate of source fuel, oxygen, and steam to the fuel reformer **(5)** is set such that the $O_2/C$ ratio, which is the ratio of the number of moles of the oxygen to the number of moles of carbon of the source fuel, is not less than 0.9 times the $O_2/C$ theoretical mixture ratio in the partial oxidation reaction, and that the $H_2O/C$ ratio, which is the ratio of the number of moles of the steam to the number of the source fuel carbon moles, is not less than 0.5.

Further, it is preferable that (a) the supply rate of source fuel, oxygen, and steam to the fuel reformer (5) is set such that the $O_2/C$ ratio, which is the ratio of the number of moles of the oxygen to the number of moles of carbon of the source fuel, is not less than 0.9 times but not more than 1.5 times the $O_2/C$ theoretical mixture ratio in the partial oxidation and the $H_2O/C$ ratio, which is the ratio of the number of moles of the steam to the number of the source fuel carbon moles, is not less than 0.5 but not more than 3, (b) the water gas shift reaction is controlled such that the $CO_2/CO$ ratio, which is the ratio of $CO_2$ to CO in an outlet gas of the fuel reformer **(5),** is not less than 0.2, and (c) the temperature of the outlet gas of the fuel reformer **(5)** is not more than 800 degrees centigrade.

As the source fuel of the hydrocarbon family, it is possible to employ propane, natural gas (including LNG), naphtha, kerosene, liquefied petroleum gas (LPG), and city gas, in addition to methane.

As a catalyst metal of the catalyst **(27)** exhibiting an activity to the partial oxidation reaction, rhodium and ruthenium are preferable. These catalyst metals may be supported on a carrier (support) in the form of a metal simple substance, in the form of an alloy, or in the form of a compound (for example, an oxide). Further, catalyst metals of two or more kinds (for example, rhodium and ruthenium) may be supported on the same carrier. Alternatively, a mixture of catalyst metals of two or more kinds supported on respective carriers may be applicable.

As the carrier, inorganic porous materials whose specific surface area is large are preferable, such as an aluminum oxide.

The catalyst **(27)** of the carrier carrying thereon a catalyst metal can be filled, in the form of a pellet, to the fuel reformer **(5)** or may be supported on a monolith carrier by a binder (for example, a honeycomb monolith carrier).

As described above, according to the fuel reformer **(5)**, a gas, whose CO concentration is low, can be obtained. However, in order to further reduce the CO concentration, an arrangement may be made in which at least one of a CO hot shift reactor, a CO cold shift reactor, and a CO partial oxidation reactor is provided.

Another invention of the present application relates to a fuel cell system which is characterized in that it comprises a hydrogen gas generator of the type as described above and a fuel cell (1) which generates electricity using, as its fuel, a hydrogen produced by the hydrogen gas generator.

According to this invention, the yield of hydrogen is improved and it is possible to reduce the quantity of external heating necessary for maintaining the reforming reaction and it is also possible to eliminate the need for external heating. Furthermore, the CO concentration of a reformed gas delivered from the fuel reformer (5) toward the fuel cell is reduced, and even when a CO shift reactor and a CO selective oxidation reactor are provided, their load is reduced, thereby achieving down-sizing.

Although the oxygen (or air) and steam of the source gas can be supplied to the fuel reformer **(5)** from respectively-provided supply sources, the discharged gas of the fuel cell can be utilized instead of using them (oxygen and steam). That is, a gas expelled from the oxygen electrode of the fuel cell contains therein oxygen that has not been used in the cell reaction and steam produced in the cell reaction. If a discharged gas supply means for supplying the discharged gas of the oxygen electrode to the fuel reformer **(5)** is provided, it is then possible to omit the provision of the oxygen (or air) supply source, a steam supply source, and their supply piping. This achieves a simplified fuel cell system configuration. However, another arrangement may be made in which a means for a supply of oxygen (or air) and a means for steam supply are provided separately for a supply of oxygen/steam to the discharged gas of the oxygen electrode.

Further, if an output current control means capable of controlling the output current of the fuel cell is provided, this makes it possible to control the oxygen concentration and the steam concentration of a discharged gas that is supplied to the fuel reformer **(5)** to fall within their respective given ranges.

That is, the coefficient of fuel (hydrogen) utilization and the coefficient of oxygen (air) utilization in a fuel cell vary with the load (the amount of electric power used) of the fuel cell. In other words, when the amount of fuel flowing into the fuel cell and the amount of oxygen flowing into the fuel cell are fixed, if the output current value of the cell is varied, the amounts of hydrogen and oxygen that are consumed in the cell reaction vary. This is accompanied with a change in the amount of steam. Accordingly, by controlling the output current value, it becomes possible to supply to the fuel reformer **(5)** a discharged gas with a given oxygen concentration and a given steam concentration that are suitable for the reforming of fuel.

In the fuel cell, the output current is controlled such that the oxygen utilization coefficient preferably ranges between 0.4 and 0.75 (40-75% of the amount of oxygen supplied). Because of this, it is possible to control the $H_2O/C$ ratio of a source gas for the fuel reformer **(5)** to range between about 0.67 and about 3.0.

That is, in the fuel cell the amount of steam produced is theoretically two times the amount of oxygen consumed ($O_2 + 2H_2 \rightarrow 2H_2O$), so that if the oxygen utilization coefficient is 0.4, an amount of steam equivalent to twice the oxygen utilization coefficient (i.e., 0.8) is produced, and the residual oxygen amount is an equivalent amount of 0.6. Therefore, the $H_2O/O_2$ ratio of the discharged gas is (0.8/0.6). If the amount of supply of the discharged gas to the fuel reformer **(5)** is controlled such that the $O_2/C$ ratio of a source gas is a stoichiometric ratio of 0.5, then the $H_2O/C$ ratio of the source gas is as follows.

$$H_2O/C \text{ ratio} = 0.5 \times (0.8/0.6) = \text{about } 0.67$$

Likewise, the following calculation is carried out for the oxygen utilization coefficient = 0.75.

$$H_2O/C \text{ ratio} = 0.5 \times (1.5/0.25) = 3$$

As described above, in accordance with the fuel reformer, a reformed gas, whose CO concentration is low, can be obtained. However, in order to further reduce the CO concentration, an arrangement may be made in which at least one of a CO hot shift reactor, a CO cold shift reactor, and a CO partial oxidation reactor is provided and the reformed gas is passed therethrough and supplied to the fuel cell.

## BRIEF DESCRIPTION OF THE DRAWINGS

Figure **1** is a diagram showing how a hydrogen gas generator according to an embodiment of the present invention and a fuel cell system employing such a hydrogen gas generator are configured.

Figure **2** shows in cross section structures of a fuel reformer and a combustor of the fuel cell system.

Figure **3** graphically shows a relationship between the $H_2O/C$ ratio of a source gas, the $CO_2/CO$ ratio of a reformed gas, and the hydrogen yield ratio.

Figure **4** is a diagram showing how a fuel cell system according to another embodiment of the present invention is configured.

Figure **5** graphically shows a relationship between the fuel utilization coefficient and the fuel conversion rate at which the energy efficiency of the fuel cell system reaches a maximum.

## BEST MODE FOR CARRYING OUT THE INVENTION

In order to describe the present invention in detail, the description thereof will be made by making reference to the accompanying drawings. The following are main reference numerals in the drawings.

**1:** FUEL CELL
**2:** OXYGEN ELECTRODE
**3:** HYDROGEN ELECTRODE
**4:** AIR COMPRESSOR (AIR SUPPLY)
**5:** FUEL REFORMER
**7:** CO HOT SHIFT REACTOR
**14:** WATER TANK (STEAM SUPPLY)
**27:** CATALYST
**35:** DISCHARGED GAS SUPPLY PIPE (DISCHARGED GAS SUPPLY MEANS)
**38:** POWER CONTROLLER (OUTPUT CURRENT CONTROL MEANS)
**39:** FLOW RATE CONTROL VALVE (AIR SUPPLY MEANS)
**40:** WATER SUPPLY PIPE (STEAM SUPPLY MEANS)
**60:** HYDROGEN GAS GENERATOR

First, the entire fuel cell system will be described below.

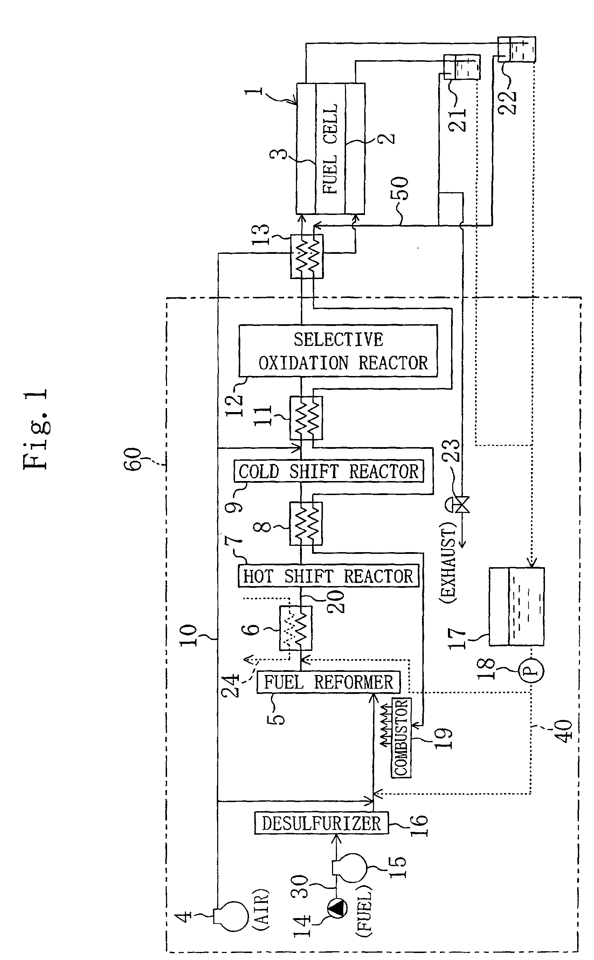

Figure **1** shows a configuration of the fuel cell system of the present invention, in which the reference numeral **1** denotes a fuel cell of the solid polyelectrolyte type having an oxygen electrode (cathode) **2** which is a catalyst electrode and a hydrogen electrode (anode) **3** which is also a catalyst electrode. An air compressor **4** is connected to the oxygen electrode **2** by an air supply pipe **10**. A fuel reformer **5** is connected to the hydrogen electrode **3** by a reformed gas supply pipe **20.** In the reformed gas supply pipe **20** are a first heat exchanger **6**, a CO hot shift reactor **7**, a second heat exchanger **8**, a CO cold shift reactor **9**, a third heat exchanger **11,** a CO selective oxidation reactor **12,** and a fourth heat exchanger **13** which are disposed in that order in the direction toward the fuel cell **1**.

A source gas supply pipe **30** establishes connection between the fuel reformer **5** and a source fuel supply (city gas) **14.** A gas compressor **15** and a desulfurizer **16** are disposed in the source gas supply pipe **30** in that order in the direction toward the fuel reformer **5.** Moreover, a pipe, branched off from the air supply pipe **10,** is connected to the fuel reformer **5** so that air for the partial oxidation reaction is supplied from the air compressor **4** to the fuel reformer **5**, and the fuel reformer **5** and a water tank **17** are connected together by a supply pipe **40** so that water for obtaining steam for the water gas shift reaction is supplied, in an atomized form, to the fuel reformer **5**. Disposed in the water supply pipe **40** is a pump **18.**

The source fuel from the source fuel supply **14**, the air from the air compressor **4**, and the steam from the water tank **17** are heated by the combustor **19** and supplied to the fuel reformer **5**. Further, connected to a portion of the reformed gas supply pipe **20** located upstream of the first heat exchanger **6** is a pipe which is branched off from the water supply pipe **40** for a supply of water in an atomized form to obtain steams for the water gas shift reaction. Connected to a portion of the reformed gas supply pipe **20** located upstream of the third heat exchanger **11** is a pipe which branched off from the air supply pipe **10** for a supply of air for the selective oxidation reactor **12.**

In the above, the air compressor **4,** the fuel reformer **5,** the CO hot shift reactor **7,** the CO cold shift reactor **9,** the selective oxidation reactor **12,** the heat exchangers **6, 8** and **11**, the source fuel supply **14,** the gas compressor **15**, the desulfurizer **16**, the water tank **17**, the pump **18,** the combustor **19,** and each piping **10, 20, 30** and **40** together form a hydrogen gas generator **60** of the present invention.

It is arranged such that discharged gases from the oxygen and hydrogen electrodes **2** and **3** of the fuel cell **1** are passed through steam separators **21** and **22.** Thereafter, these gases are merged together and supplied, through a gas pipe **50,** to the combustor **19** as a gas for combustion. The discharged gas of the oxygen electrode **2** can suitably be vented by a valve **23** to atmosphere. The gas pipe **50** is so laid out as to pass through the fourth heat exchanger **13**, through the third heat exchanger **11**, and through the second heat exchanger **8** in that order, and the discharged gas is heated by heat exchange with the reformed gas in each heat exchanger and supplied to the combustor **19.** Accordingly, the reformed gas is, on the contrary, cooled in each heat exchanger and supplied to the fuel cell **1.** Another cooled water pipe **24** passes through the first heat exchanger **6** and the reformed gas is cooled by heat exchange with the cooled water flowing through the cooled water pipe **24**.

The fuel reformer **5** is filled with a catalyst (which is formed of $Al_2O_3$ carrying thereon either Ru or Rh) that exhibits an activity to the partial oxidation reaction. The CO hot shift reactor **7** is filled with a catalyst, such as $Fe_2O_3$ and $Cr_2O_3$, that exhibits an activity to the water gas shift reaction at high temperatures (400 degrees centigrade or thereabouts). The CO cold shift reactor **9** is filled with a catalyst, such as CuO and ZnO, that exhibits an activity to the water gas shift reaction at low temperatures (180 degrees centigrade or thereabouts). The CO selective oxidation reactor **12** is filled with a catalyst (which is formed of $Al_2O_3$ or zeolite carrying thereon Ru or Pt) that exhibits an activity to the selective oxidation reaction. The combustor **19** is filled with a combustion catalyst. Furthermore, the fuel reformer **5** is provided with an electric heater for preheating.

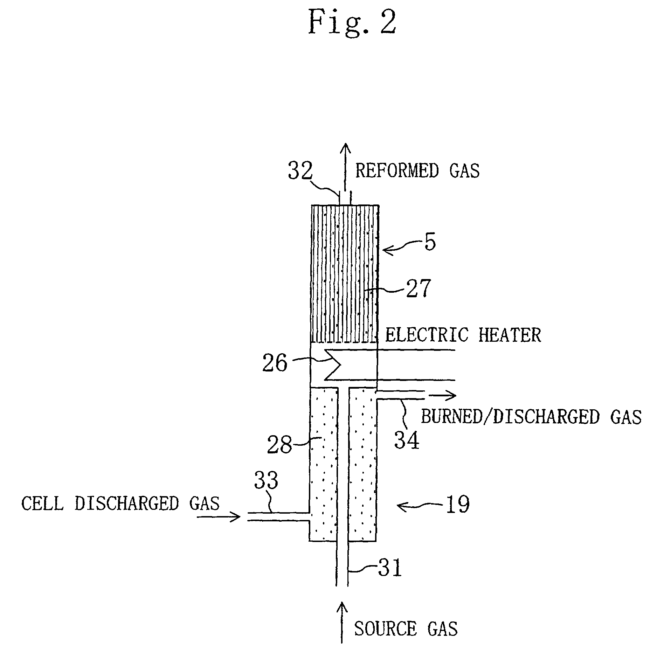

Referring to Figure **2**, there is shown a reactor **25** which is an integration of the fuel reformer **5** and the combustor **19**. In the reactor **25** of Figure **2**, an electric heater **26** is incorporated between the upper-side fuel reformer **5** and the lower-side combustion **19**. A site of the fuel reformer **5** is filled with a honeycomb catalyst **27** of a honeycomb monolith carrier carrying thereon a catalyst. A site of the combustion **19** is filled with a combustion catalyst **28,** and a source gas passage **29** extends from a source gas inlet **31** at the lower end to where the electric heater is disposed, passing through the catalyst-filled site of the combustor **19**. Moreover, in Figure **2**, the reference numeral **32** denotes a reformed gas outlet, the reference numeral **33** denotes an inlet of the discharged gas from the fuel cell **1**, and the reference numeral **34** denotes a combusted/discharged gas outlet.

In the above-described fuel cell system, the temperature of the fuel reformer **5** when the system is started is low, so that the electric heater is operated until the temperature is increased to such an extent that the catalyst becomes active, for example, about 460 degrees centigrade. After the system is started, the electric heater is turned off, and a source gas (source fuel and a mixed gas of air and steam) is preheated only in the combustor **19**. The source gas is controlled such that the $H_2O/C$ ratio ranges between 0.5 to 3 and the $O_2/C$ ratio ranges between 0.45 and 0.75, by controlling the supply amount of source fuel, air, and steam. The outlet gas temperature of the fuel reformer **5** is separately controlled so as not to go beyond 800 degrees centigrade. A most preferable operating condition is as follows. That is, the $H_2O/C$ ratio is 1.0, the $O_2/C$ ratio is from 0.52 to 0.60 (more preferably, 0.56), the outlet gas temperature of the fuel reformer **5** is 720 degrees centigrade, and the $CO_2/CO$ ratio of the outlet gas of the fuel reformer **5** is 0.4.

After desulfurization, the source fuel is heated together with air and atomized water, by the electric heater or the combustor **19** and supplied to the catalyst of the fuel reformer **5**. The atomized water is changed to steams by such heating. The partial oxidation reaction of the source fuel occurs on the catalyst of the fuel reformer **5**, thereby producing hydrogen and CO (see Formula (1)). Since there exist steams in the inside of the fuel reformer **5**, this causes, at the same time, a water gas shift reaction to take place, as a result of which hydrogen and carbon dioxide are generated, and the CO concentration is reduced (see Formula (2) ).

Leaving the fuel reformer **5**, the reformed gas is cooled down to about 400 degrees centigrade in the first heat exchanger **6** and delivered to the CO hot shift reactor **7** where the CO concentration is further reduced by a water gas shift reaction taking place on the catalyst of the shift reactor **7**. Then, leaving the CO hot shift reactor **7**, the reformed gas is further cooled down to about 180 degrees centigrade in the second heat exchanger **8** and supplied to the CO cold shift reactor **9** where the CO concentration is further reduced by a water gas shift reaction taking place on the catalyst of the shift reactor **9**. Then, leaving the CO cold shift reactor **9**, the reformed gas is cooled down to about 140 degrees centigrade in the third heat exchanger **11** and supplied to the CO selective oxidation reactor **12** where the CO concentration is further reduced by a water gas shift reaction taking place on the catalyst of the reactor **12**. Leaving the CO selective oxidation reactor **12,** the reformed gas is cooled down to about 80 degrees centigrade in the fourth heat exchanger **13** and supplied to the hydrogen electrode **3** of the fuel cell **1.**

In the fuel cell **1**, a cell reaction of $2H_2 \rightarrow 4H^+ + 4e^-$ occurs at the surface of the hydrogen electrode **3** and a cell reaction of $O_2 + 4H^+ + 4e^- \rightarrow 2H_2O$ occurs at the surface of the oxygen electrode **2**. Therefore, a discharged gas from the oxygen electrode **2** contains therein residual air that has not been used in the cell reaction and steams produced by the cell reaction. On the other hand, contained in a discharged gas from the hydrogen electrode **3** are hydrogen that has not been used in the cell reaction, non-reformed source fuel, air, and steam.

The discharged gases of the oxygen and hydrogen electrodes **2** and **3** pass through the steam separators **21** and **22** and are merged together. Thereafter, the discharged gas thus merged is heated by heat exchange in the fourth, third and second heat exchangers **13, 11,** and **8** and delivered to the combustor **19**.

**EP 1 148 024 A1**

The discharged gas contains hydrogen and oxygen which undergo a reaction by the action of the combustion catalyst in the combustor **19,** and the resulting reaction heat becomes a preheating supply for the source gas. On the other hand, the non-reformed source material contained in the discharged gas is burned at the same time to become a preheating supply.

Next, the relationship between $H_2O/C$ ratio, $CO_2/CO$ ratio, and hydrogen yield ratio will be described below.

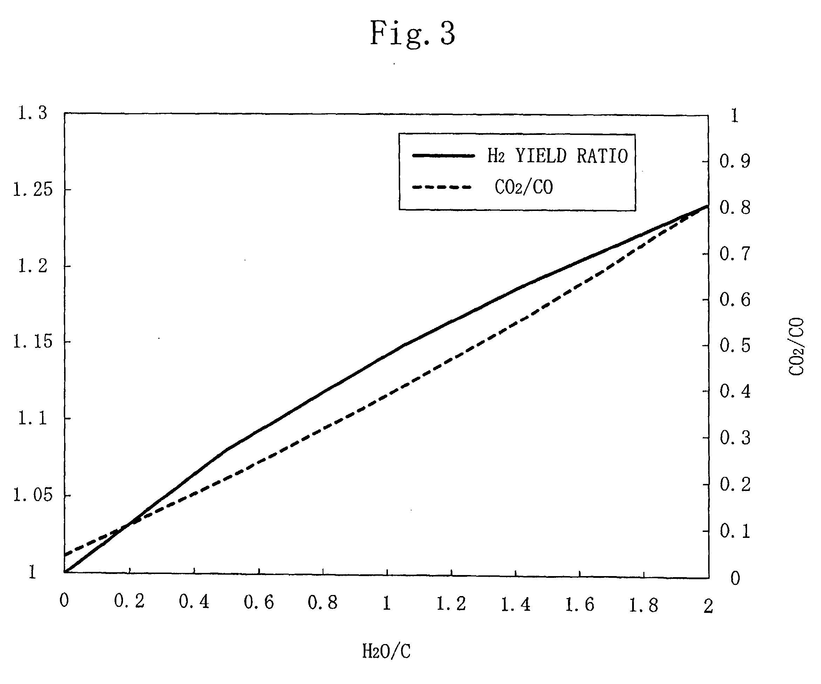

Referring to Figure **3**, there is shown a relationship between the $H_2O/C$ ratio of a source gas that is introduced into the fuel reformer **5** (i.e., the ratio of the number of moles of steam to the number of moles of carbon in a source fuel), the $CO_2/CO$ ratio of a reformed gas from the fuel reformer **5** (i.e., the ratio of $CO_2$ to CO in a reformer outlet gas), and the hydrogen yield ratio by the fuel reformer **5** (i.e., the ratio in which the hydrogen yield is 1 when $H_2O/C$ ratio = 0.5). The operation condition of the fuel reformer **5** is as follows. The inlet gas temperature is 460 degrees centigrade. The $O_2/C$ ratio (i.e., the ratio of the number of moles of oxygen to the number of moles of carbon of a source fuel) is 0.56. The gas pressure is 150 kPa.

According to Figure **3,** as the $H_2/C$ ratio increases, the $CO_2/CO$ ratio likewise increases. The fact that the $CO_2/CO$ ratio is great means that CO changes to $CO_2$ in the fuel reformer **5.** This change is attributed to the complete oxidation reaction of the source fuel as well as to the water gas shift reaction of CO. It is proved that the addition of steams makes it possible to cause the water gas shift reaction to efficiently proceed in the fuel reformer **5,** for it is not conceivable that the increase in the $H_2/CO$ ratio (i.e., the increase in the amount of steam) makes the complete oxidation reaction easy to proceed.

Figure **3** shows that the hydrogen yield increases if the $H_2/C$ ratio is not less than 0.5. The hydrogen yield increases if the water gas shift reaction in the fuel reformer **5** is so controlled as to increase the $CO_2/CO$ ratio above 0.2. In other words, the hydrogen yield can be increased by controlling the source gas composition, the reaction temperature or others.

Next, the effect of the type of the catalyst **27** of the fuel reformer **5** on the reformed gas composition will be explained.

Referring to Table **1**, there is shown a relationship between the inlet gas composition (the source gas composition) and the outlet gas composition (the reformed gas composition) of the fuel reformer 5 when fuel reforming was carried out employing different catalysts for use in the fuel reformer **5**. Three types of catalysts, i.e., $Ni-Al_2O_3$ (formed of $Al_2O_3$ carrying thereon Ni), $Rh-Al_2O_3$ (formed of $Al_2O_3$ carrying thereon Rh), and $Ru-Al_2O_3$ (formed of $Al_2O_3$ carrying thereon Ru), were used.

TABLE 1

| CATALYST TYPE | GAS | INLET COMPOSITION | OUTLET COMPOSITION |
|---|---|---|---|
| $Ni-Al_2O_3$ | $H_2$ | - | 0.3071 |
| | $N_2$ | 0.4637 | 0.4728 |
| | $CH_4$ | 0.2200 | 0.0549 |
| | CO | - | 0.1063 |
| | $CO_2$ | - | 0.0590 |
| | $O_2$ | 0.1233 | - |
| | $H_2O$ | 0.1931 | - |
| | $SV(h^{-1})$ | 143000 | - |
| $Rh-Al_2O_3$ | $H_2$ | - | 0.3704 |
| | $N_2$ | 0.4638 | 0.4301 |
| | $CH_4$ | 0.2199 | 0.0168 |
| | CO | - | 0.1261 |
| | $CO_2$ | - | 0.0566 |
| | $O_2$ | 0.1233 | - |
| | $H_2O$ | 0.1930 | - |
| | $SV(h^{-1})$ | 143000 | - |

TABLE 1   (continued)

| CATALYST TYPE | GAS | INLET COMPOSITION | OUTLET COMPOSITION |
|---|---|---|---|
| **Ru-Al$_2$O$_3$** | H$_2$ | - | 0.3649 |
| | N$_2$ | 0.4638 | 0.4330 |
| | CH$_4$ | 0.2199 | 0.0215 |
| | CO | - | 0.1211 |
| | CO$_2$ | - | 0.0596 |
| | O$_2$ | 0.1233 | - |
| | H$_2$O | 0.1930 | - |
| | SV(h$^{-1}$) | 143000 | - |

As can be seen from Table **1**, for the case of the Rh-Al$_2$O$_3$ catalyst and the Ru-Al$_2$O$_3$ catalyst, the rate of conversion of methane into hydrogen is high, whereas for the case of the Ni-Al$_2$O$_3$ catalyst the conversion rate is low. From this, it is preferable to employ in the fuel reformer **5** either the Rh-Al$_2$O$_3$ catalyst or the Ru-Al$_2$O$_3$ catalyst.

Next, the effect of the H$_2$O/C ratio on the reformed gas composition in the Rh-Al$_2$O$_3$ catalyst will be explained.

Referring to Table **2,** there is shown a relationship between the inlet gas composition (the source gas composition) and the outlet gas composition (the reformed gas composition) of the fuel reformer **5** when the Rh-Al$_2$O$_3$ catalyst was employed in the fuel reformer **5,** and fuel reforming was carried out at different H$_2$O/C ratios.

Table 2

| CATALYST TYPE | GAS | INLET COMPOSITION | OUTLET COMPOSITION |
|---|---|---|---|
| Rh-Al$_2$O$_3$ | H$_2$ | - | |
| | N$_2$ | 0.4637 | 0.3913 |
| | CH$_4$ | 0.2199 | |
| | CO | - | 0.4161 |
| | CO$_2$ | - | |
| | O$_2$ | 0.1233 | 0.0086 |
| | H$_2$O | 0.1931 | |
| | SV(h$^{-1}$) | 29000 | 0.1175 |
| | ..... | .................... . | |
| | H$_2$ | - | 0.0665 |
| | N$_2$ | 0.3758 | |
| | CH$_4$ | 0.1781 | - |
| | CO | - | |
| | CO$_2$ | - | - |
| | O$_2$ | 0.0999 | |
| | H$_2$O | 0.3462 | - |
| | SV(h$^{-1}$) | 29000 | .................... . |
| | | | 0.4121 |
| | | | 0.4029 |
| | | | 0.0073 |
| | | | 0.0805 |
| | | | 0.0973 |
| | | | - |
| | | | - |
| | | | - |

As can be seen from Table **2,** as the H$_2$O/C ratio increases, the CO$_2$/CO ratio increases and the hydrogen yield also increases. This agrees with the result shown in Figure **3.**

Next, another embodiment of the fuel cell system of the present invention will be described below.

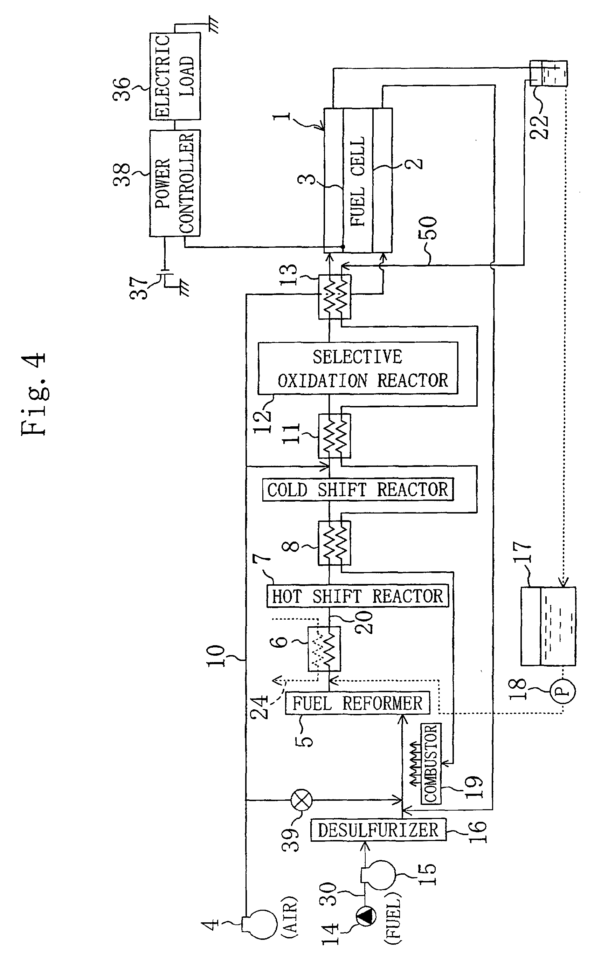

Referring to Figure **4**, there is shown another embodiment of the fuel cell system of the present invention. The present fuel cell system differs from the first fuel cell system. First, instead of introducing to the fuel reformer **5** air from the air compressor **4** and water from the water tank **17**, the discharged gas of the oxygen electrode **2** is supplied through a supply pipe **35** to the fuel reformer **5**. Second, another power supply **37** and the fuel cell **1** are connected in parallel to an electric load **36** and a power controller **38** for controlling the output current value of the fuel cell **1** is disposed. Finally, a flow rate control valve **39** is disposed in a branch pipe extendedly arranged from the air supply pipe **10** toward the source gas supply pipe **30** to form an air supply means.

As described above, the discharged gas of the oxygen electrode **2** contains steams and unused air. The discharged gas is therefore used as a gas for source fuel reforming in the fuel reformer **5** and the power controller **38** is disposed to make the composition of the discharged gas suitable for fuel reforming. By controlling the output current value of the fuel cell **1** with the power controller **38**, the coefficient of utilization of hydrogen and air of the fuel cell **1** varies and, as a result, the oxygen concentration and the steam concentration of the discharged gas of the oxygen electrode **2** vary. The lack of electric power resulting from such control is supplemented by the power supply **37**.

If the coefficient of utilization of hydrogen is 100% when the amount of hydrogen used in the fuel cell 1 is 1L/min (0 °C and 1 atmospheric pressure), then the output current value A at that time is theoretically as follows.

$$A = 2 \, nF$$

$$= 143 \, (ampere)$$

(A: C(coulomb)/sec; n: mole/sec; and F: Faraday constant)

Accordingly, if the output current value is decreased below the above theoretical value, then both the hydrogen utilization coefficient (the fuel utilization coefficient) and the air utilization coefficient decrease. In this case, the air utilization coefficient is so controlled to fall in the range, for example, between 0.4 and 0.75.

Further, the lack of air when the air utilization coefficient is increased is supplemented by introducing air from the air compressor **4** by the flow rate control valve **39**.

Next, the relationship between fuel utilization coefficient and fuel conversion rate will be explained.

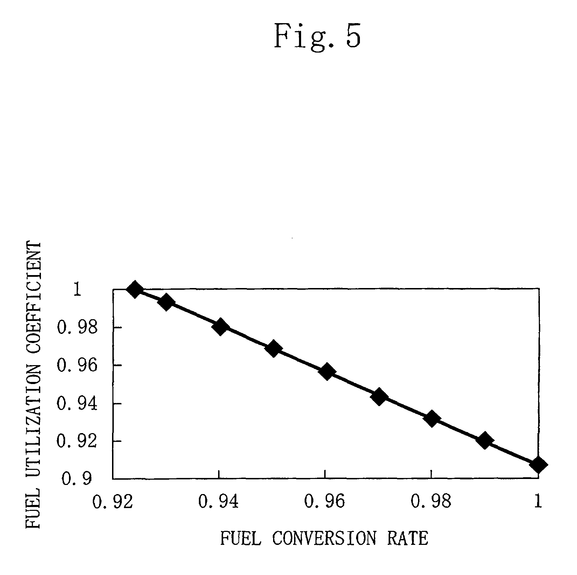

Figure **5** graphically shows a relationship between the fuel utilization coefficient of the fuel cell **1** and the fuel conversion rate of the fuel reformer **5** at which the energy efficiency reaches a maximum in a fuel cell system which uses a source fuel which has not been reformed and a hydrogen which has not been used of the source fuel supplied from the source fuel supply **14** for fuel gas preheating.

For example, when the fuel conversion rate is 0.94, the fuel utilization coefficient, at which the energy efficiency reaches a maximum, is 0.98. In this example, 6% of the source fuel that has been remained unreformed and 2% of the hydrogen in the reformed gas that has been remained unused in the cell reaction were utilized for source gas preheating.

In each of the embodiments of the present invention, the combustor **19** is provided, wherein the discharged gas of the fuel cell **1** is utilized for source gas preheating. An arrangement may be made in which the provision of the combustor **19** is omitted and the discharged gas is burned in the catalyst to provide another heat supply. The reason is that since both the partial oxidation reaction and the water gas shift reaction occurring in the fuel reformer **5** are exothermic, the reaction temperature is maintained by the exothermic reaction heat after the fuel reformer **5** is heated up to the reaction temperature by the electric heater at the start.

**Claims**

1. A hydrogen gas generator for generating hydrogen from a source fuel of the hydrocarbon family, oxygen, and steam,
said hydrogen gas generator comprising:

a fuel reformer **(5)** with a catalyst **(27)** which exhibits an activity to a partial oxidation reaction of said source fuel; wherein said source fuel, oxygen, and steam are supplied to said reformer **(5)** so that said partial oxidation reaction occurs on said catalyst **(27)** and a water gas shift reaction occurs in which CO produced in said partial oxidation reaction is a reactant.

2. The hydrogen gas generator of claim 1, wherein said water gas shift reaction is controlled such that the $CO_2$/CO ratio, which is the ratio of $CO_2$ to CO in an outlet gas of said fuel reformer **(5)**, is not less than 0.2.

3. The hydrogen gas generator of claim 1, wherein the supply rate of source fuel and steam to said fuel reformer is set such that the $H_2O$/C ratio, which is the ratio of the number of moles of said steam to the number of moles of carbon of said source fuel, is not less than 0.5.

4. The hydrogen gas generator of claim 3, wherein the $H_2O/C$ ratio is not more than 3.

5. The hydrogen gas generator of claim 1, wherein the outlet gas temperature of said fuel reformer **(5)** is not more than 800 degrees centigrade.

6. The hydrogen gas generator of claim 1, wherein the supply rate of source fuel and oxygen to said fuel reformer **(5)** is set such that the $O_2/C$ ratio, which is the ratio of the number of moles of said oxygen to the number of moles of carbon of said source fuel, is not less than 0.9 times the $O_2/C$ theoretical mixture ratio in said partial oxidation reaction.

7. The hydrogen gas generator of claim 1, wherein the supply rate of source fuel and oxygen to said fuel reformer **(5)** is set such that the $O_2/C$ ratio, which is the ratio of the number of moles of said oxygen to the number of moles of carbon of said source fuel, is greater than said $O_2/C$ theoretical mixture ratio in said partial oxidation reaction.

8. The hydrogen gas generator of claim 6, wherein said $O_2/C$ is not more than 1.5 times said $O_2/C$ theoretical mixture ratio

9. The hydrogen gas generator of claim 1, wherein the supply rate of source fuel, oxygen, and steam to said fuel reformer **(5)** is set such that the $O_2/C$ ratio, which is the ratio of the number of moles of said oxygen to the number of moles of carbon of said source fuel, is not less than 0.9 times said $O_2/C$ theoretical mixture ratio in said partial oxidation reaction, and that the $H_2O/C$ ratio, which is the ratio of the number of moles of said steam to the number of said source fuel carbon moles, is not less than 0.5.

10. A hydrogen gas generator for generating hydrogen from a source fuel of the hydrocarbon family, oxygen, and steam,
    said hydrogen gas generator comprising:

    a fuel reformer **(5)** with a catalyst **(27)** which exhibits an activity to a partial oxidation reaction of said source fuel; wherein the supply rate of source fuel, oxygen, and steam to said fuel reformer **(5)** is set such that the $O_2/C$ ratio, which is the ratio of the number of moles of said oxygen to the number of moles of carbon of said source fuel, is not less than 0.9 times but not more than 1.5 times the $O_2/C$ theoretical mixture ratio in said partial oxidation, and that the $H_2O/C$ ratio, which is the ratio of the number of moles of said steam to the number of said source fuel carbon moles, is not less than 0.5 but not more than 3, whereby said partial oxidation reaction occurs on said catalyst and a water gas shift reaction occurs in which CO produced in said partial oxidation reaction is a reactant;
    wherein said water gas shift reaction is controlled such that the $CO_2/CO$ ratio, which is the ratio of $CO_2$ to CO in an outlet gas of said fuel reformer **(5),** is not less than 0.2; and
    wherein the temperature of said outlet gas of said fuel reformer **(5)** is not more than 800 degrees centigrade.

11. The hydrogen gas generator of claim 1, wherein an active site of said catalyst **(27)** is formed of at least one of rhodium and ruthenium.

12. The hydrogen gas generator of claim 11, wherein said catalyst **(27)** is supported on a honeycomb monolith carrier

13. A fuel cell system comprising:

    a hydrogen gas generator of any one of claims 1-12; and
    a fuel cell **(1)** capable of generating electricity by making use of hydrogen produced by said hydrogen gas generator as a fuel.

14. The fuel cell system of claim 13 further comprising:
    discharged gas supply means **(35)** for supplying a steam-containing gas, discharged from an oxygen electrode of said fuel cell, to said fuel reformer **(5)** for a supply of steam to said fuel reformer **(5).**

15. The fuel cell system of claim 13 further comprising:
    output current control means **(38)** for controlling the output current of said fuel cell so that the oxygen concentration and the steam concentration of a discharged gas that is supplied to said fuel reformer **(5)** fall within their respective given ranges.

16. The fuel cell system of claim 13 further comprising:
    output current control means for controlling the output current of said fuel cell so that the coefficient of utilization of oxygen of said fuel cell ranges from 0.4 to 0.75.

17. The fuel cell system of claim **13** further comprising:
    air supply means **(39)** for a supply of air to said fuel reformer **(5)**.

Fig. 1

EP 1 148 024 A1

# Fig. 2

32 → REFORMED GAS

5

27

ELECTRIC HEATER

26

BURNED/DISCHARGED GAS

28

34

33

CELL DISCHARGED GAS →

19

31

↑ SOURCE GAS

## Fig. 3

EP 1 148 024 A1

# Fig. 4

EP 1 148 024 A1

# Fig.5

| INTERNATIONAL SEARCH REPORT | International application No. |
|---|---|
| | PCT/JP00/06075 |

A. CLASSIFICATION OF SUBJECT MATTER
    Int.Cl⁷ C01B3/48, H01M8/06

According to International Patent Classification (IPC) or to both national classification and IPC

B. FIELDS SEARCHED

Minimum documentation searched (classification system followed by classification symbols)
    Int.Cl⁷ C01B3/48, H01M8/06, H01M8/04

Documentation searched other than minimum documentation to the extent that such documents are included in the fields searched
    Jitsuyo Shinan Koho        1926-1996    Toroku Jitsuyo Shinan Koho  1994-2000
    Kokai Jitsuyo Shinan Koho  1971-2000    Jitsuyo Shinan Toroku Koho  1969-2000

Electronic data base consulted during the international search (name of data base and, where practicable, search terms used)
    WPI/L

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP, 6-279001, A (Idemitsu Kosan Co., Ltd.),<br>04 October, 1994 (04.10.94),<br>Claims; Par. Nos. [0015] to [0016], [0042] to [0052]<br>(Family: none) | 1-10,13,17<br>11,12,14<br>15,16 |
| X | EP, 576096, A2 (SHELL INTERNATIONALE RESEARCH<br>MAATSCHAPPIJ B.V.),<br>29 December, 1993 (29.12.93),<br>Claims; page 4, lines 27 to 29<br>& JP, 6-92603, A<br>Claims; Par. No. [0012], lines 11 to 14<br>& CN, 1081998, A | 1-12 |
| X | WO, 85/05094, A1 (THE BRITISH PETROLEUM COMPANY P.L.C.),<br>21 November, 1985 (21.11.85),<br>Claims 1, 19; examples 3,4; in Table 2<br>& JP, 60-239301, A<br>Claims 1, 19; examples 3,4; in Table 2<br>& EP, 164864, B    & US, 4758375, A<br>& CN, 8504091, A | 1,2,5-7, |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    04 December, 2000 (04.12.00) | Date of mailing of the international search report<br>    19 December, 2000 (19.12.00) |
|---|---|
| Name and mailing address of the ISA/<br>    Japanese Patent Office | Authorized officer |
| Facsimile No. | Telephone No. |

Form PCT/ISA/210 (second sheet) (July 1992)

**INTERNATIONAL SEARCH REPORT**

| International application No. |
| --- |
| PCT/JP00/06075 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP, 60-161303, A (Osaka Gas Co., Ltd.),<br>23 August, 1985 (23.08.85),<br>Claims; page 2, upper left column, line 5 to page 2, upper<br>right column, the 4<sup>th</sup> line from the bottom (Family: none) | 1-12 |
| Y | JP, 2-160603, A (Kawasaki Heavy Industries, Ltd.),<br>20 June, 1990 (20.06.90),<br>Claims (Family: none) | 11,12 |
| X<br>Y | JP, 11-139802, A (AISIN SEIKI CO., LTD. et al.),<br>25 May, 1999 (25.05.99)<br>& DE, 19850864, A | 1,13,17<br>14 |
| Y | JP, 4-286870, A (Nippon Telegr. & Teleph. Corp. <NTT>),<br>12 October, 1992 (12.10.92) (Family: none) | 14 |
| Y | US, 4365006, A (ENERGY RESERCH CORPORATION),<br>21 December, 1982 (21.12.82)<br>& JP, 57-170462, A & EP, 61727, A2 | 14 |
| X<br>Y | JP, 7-57756, A (Toshiba Corporation),<br>03 March, 1995 (03.03.95),<br>Claims; Par. No. [0019]; example (Family: none) | 1,3-5,11-13,17<br>14 |
| EA | JP, 2000-306594, A (Toyota Motor Corporation),<br>02 November, 2000 (02.11.00) (Family: none) | 1-17 |

Form PCT/ISA/210 (continuation of second sheet) (July 1992)